# EUROPEAN PATENT APPLICATION

(11) **EP 4 351 277 A1**
(43) Date of publication of application: **10.04.2024**
(21) Application number: 22200315.4
(22) Date of filing: 07.10.2022
(51) Int. Cl.: H05B 6/64, H05B 6/76, F24C 15/02

(54) **OVEN**

(71) Applicant: ELECTROLUX APPLIANCES AKTIEBOLAG, 105 45 Stockholm (SE)
(72) Inventor: SPECHT, Trevor, 91541 Rothenburg ob der Tauber (DE); WEBER, Mario, 91541 Rothenburg ob der Tauber (DE); ZIEGLER, Sascha, 91541 Rothenburg ob der Tauber (DE)
(74) Representative: Electrolux Group Patents

(57) **Abstract**

There is described an oven (1), preferentially having a microwave heating function, for heating an item comprising: an oven cavity (3) containing the item to be heated and provided with a front opening (3a) allowing to access the oven cavity (3); a perimeter front frame (4) carried by the oven cavity (3) and surrounding the front opening (3a) of the oven cavity (3); an oven door (6) movable from and towards a closed position; and an annular gasket (12) carried by the oven door (6) and abutting against the front frame (4) of the oven body (2) when the door frame (6) is in the closed position, for sealing the oven cavity (3). The oven door comprises an inner door cover (7), which is arranged skimming the front frame (4) when the oven door (6) is in the closed position. The inner door cover (7) comprises an annular groove (17), which extends on the surface of the inner door cover (7) facing the front frame (4) and accommodates the annular gasket (15).

## Description

The present invention relates to an oven, in particular an oven having a microwave heating function.

As known, microwave ovens typically comprise a box-shaped oven body including: an oven cavity, which is adapted to contain food products, e.g. in solid and/or liquid form, to be heated and is provided with a front opening allowing to access the inside space of the oven cavity; and a perimeter front frame, which is carried by the oven cavity and surrounds seamlessly the front opening of the oven cavity.

In addition, microwave ovens usually comprise an oven door that is carried in an angular moveable manner by the oven body and is movable from and toward a closed position, within which the oven door closes the front opening of the oven cavity.

A tight annular gap or slot may be defined on the oven body, between the perimeter front frame and the oven cavity. The annular gap may seamlessly surround the front opening of the oven cavity and may accommodate an annular gasket. In particular, the annular gasket may be firmly attached to the oven body, inside the annular gap defined between the perimeter front frame and the oven cavity.

For example, the above-mentioned annular gasket may comprise a first stiff end portion that is hook-like shaped, is made at least partially by a metal material, and engages to a protruding lip of the perimeter front frame of the oven body, inside the annular gap surrounding the front opening. In addition, the above-mentioned annular gasket may comprise a second flexible end portion, opposite to the first end portion, which is made by a polymeric material, protrudes cantilevered from the perimeter front frame of the oven body and is adapted to be arranged in abutment against the oven door when this latter is in the closed position, in order to seal the oven cavity.

The oven door, on the other hand, may have a box-like structure and may comprise an inner door cover facing the oven body and an outer front glass panel carried by the inner door cover, on the opposite side with respect to the oven body. In particular, the inner door cover is adapted to be arranged into abutment against the annular gasket carried by the oven body when the oven door is in the closed position.

Unfortunately, the assembly of the above-described annular gasket inside the annular gap defined on the oven body, between the oven cavity and the perimeter front frame, is cumbersome and time-consuming. Indeed, the above-described gasket has to be manually pushed by an operator inside the annular gap during the assembly of the microwave oven, in the product assembly line.

In particular, the operator is required to exert a considerable force to manually deform the stiff hook-shaped end portion of the annular gasket to engage this latter to the perimeter front frame, and sometimes it is also required the usage of lubricants to be able to slide the hook-shaped end portion of the annular gasket inside the annular gap, with all the drawbacks that this entails.

Therefore, the need is felt in the sector to improve the known microwave ovens, in particular so as to simplify and to speed up the assembly of the microwave oven, and to further enhance the cleanability and aesthetic appearance of the microwave oven.

Aim of the present invention is to solve the above-mentioned needs in a cost effective and optimized manner.

According to the present invention, there is provided an oven, preferentially an oven having a microwave heating function, according to the respective independent claim.

Preferred non-limiting embodiments are claimed in the claims directly or indirectly depending on the independent claim.

In addition, according to the present invention, there is provided an oven for the thermal treatment of an item, preferentially a food product, and preferentially having a microwave heating function. The oven comprises at least:
- an oven cavity, which extends along a reference axis, is adapted to contain the item to be thermally treated and is provided with a front opening allowing to access the oven cavity;
- a perimeter front frame, which is carried by the oven cavity and surrounds the front opening of the oven cavity;

- an oven door, which is movable from and towards a closed position, in which the oven door closes the front opening of the oven cavity; and
- an annular gasket, which is carried by the oven door and is configured to abut against the perimeter front frame when the oven door is in the closed position, in order to seal the oven cavity.

The oven door comprises an inner door cover, which is adapted to be arranged skimming the perimeter front frame when the oven door is in the closed position and is provided with an annular groove extending on the surface of the inner door cover facing the front frame and accommodating the annular gasket.

In this way, one achieves an improved and simplified assembly of the oven. In particular, the oven door and the annular gasket carried by the oven door may be completely pre-assembled before reaching the product assembly line, with all the benefits that this entails.

In addition, the presence of the annular groove in the inner door cover accommodating the annular gasket allows one to have a completely free design choice in deciding the position, the shape and the dimensions of these two components. In this way, it is possible to optimize the sealing performance of the oven door while keeping the annular gap between the inner door cover and the perimeter front frame as small as possible. This is particularly advantageous if the oven has a microwave heating function as the sealing performance does not compromise the microwave sealing performances of the wave choke system, which may be carried by the oven door.

Another particular advantage of the oven according to the present invention is related to the enhanced cleanability and the improved aesthetic appearance of the oven, as the front surface of the oven body is smooth and homogeneous, and there are no gaps or crevices between the perimeter front frame and the oven cavity. In particular, this prevents parts of the items to deposit between the oven cavity and the perimeter front frame, making it much easier to clean the oven body of the oven.

According to some preferred non-limiting embodiments, the inner door cover is formed as a single piece and comprises a rear wall that lies on a plane orthogonal to the reference axis and skims the perimeter front frame when the oven door is in the closed position; the annular groove extends on the rear wall of the inner door cover so as to surround seamlessly the front opening of the oven cavity when the oven door is in the closed position.

By having an inner door cover formed as a single piece and provided with the annular groove for accommodating the annular gasket, one achieves an improved assembly of the annular gasket on the inner door cover. Indeed, the annular groove may be specifically designed to accommodate the annular gasket.

According to some preferred non-limiting embodiments, the annular gasket is provided with anchoring means that are configured to engage within the annular groove, in order to steadily retain the annular gasket inside the annular groove.

Indeed, the anchoring means improves the engagement and the positioning of the annular gasket inside the annular groove.

According to some preferred non-limiting embodiments, the annular grove comprises: a first annular groove portion, which connects to the rear wall and delimits an opening of the annular groove allowing the annular gasket to be at least partially arranged within the annular groove; and a second annular groove portion, which connects to the first annular groove portion, on the opposite side with respect to the rear wall.

Preferably, though not necessarily, the first annular groove portion is shaped so as to define a seat accommodating a portion of the annular gasket.

The seat allows one to simplify and speed-up the insertion and the placement of the annular gasket inside the annular groove.

According to some preferred non-limiting embodiments, the annular groove is provided with a plurality of cutouts that are formed in the second annular groove portion and are angularly spaced apart from one another along the annular groove.

The cutouts allow the annular gasket to locally deform and expand inside the annular groove, so as to improve the engagement of the annular gasket inside the annular groove, in particular allowing to improve the fastening of the annular gasket within the annular groove. In addition or in alternative, one is able to reach the annular gasket from below through the cutouts, in order to pull down and adjust the positioning of the annular gasket inside the annular groove.

According to some preferred non-limiting embodiments, the annular gasket comprises: a first annular gasket portion, which is arranged at least partially within the first annular groove portion and protrudes cantilevered from the inner door cover, in order to abut against the perimeter front frame when the oven door is in the closed position; and a second annular gasket portion, which connects to the first annular gasket portion and is arranged within the second annular groove portion.

The first annular gasket portion abutting against the perimeter front frame when the oven door is in the closed position seals the oven cavity against steam and/or thermal leakages.

According to some preferred non-limiting embodiments, the second annular groove portion has a substantially U-shaped profile and comprises two facing sidewalls connected by a base wall.

Having a substantially U-shaped portion, the annular groove is able to accommodate the annular gasket so that the gap between the oven door and the perimeter front frame is as small as possible when the oven door is in the closed position.

According to some preferred non-limiting embodiments, the anchoring means of the annular gasket comprise a pair of laterally protruding lips, which protrude from opposite sides of the second annular gasket portion, in a direction transversal to annular gasket and/or towards the first annular portion, and are configured to engage with the sidewalls of the second annular groove portion.

The two laterally protruding lips allow one to improve the fixing of the annular gasket inside the annular groove against both pulling and twisting in a simple and cost-effective manner. Indeed, the laterally protruding lips are part of the annular gasket, which is produced as a single piece by means of an extrusion process.

Preferably, though not necessarily, the first annular gasket portion is provided with a protruding annular lip configured to be pressed against the perimeter front frame when the oven door is in the closed position.

Optionally, the protruding annular lip may have a C-shaped profile.

The protruding annular lip allows one to increase the sealing performances of the annular gasket against thermal and/or steam leakages. In particular, the C-shaped profile of the protruding annular lip of the first annular gasket portion creates an under pressure area when it is pressed against the perimeter front frame, so as to effectively seal the oven cavity against thermal and/or steam leakages.

According to some preferred non-limiting embodiments, the annular gasket is formed as a single piece and is made out of a single polymeric material.

In this way, one achieves a simplified and cheaper production of the annular gasket.

According to some preferred non-limiting embodiments, the perimeter front frame is connected directly and seamlessly to the perimeter edge of the oven cavity that bounds the front opening, so that no gap or crevice is left between the perimeter edge of the oven cavity that bounds the front opening and the perimeter front frame.

In this way, the aesthetic appearance and the cleanability of the oven are improved, as there are no more crevices or gaps between the annular perimeter edge of the oven cavity and the perimeter front frame. In addition, the assembly of the oven body is simplified, as the perimeter front frame may be directly fixed to the oven cavity, for instance by welding.

According to some preferred non-limiting embodiments, the oven door further comprises:
- an outer door cover, preferentially having a shape complementary to the shape of the inner door cover and, is coupled to the inner door cover, on the opposite side with respect to the oven cavity;
- an inner glass panel carried by the inner door cover; and
- a wave choke system that is carried by the inner door cover.

In this way, one ensures to prevent microwave leakages and at the same time allows to visually inspect the inside of the oven cavity during oven operation, when the oven door is closed.

Preferentially, but not necessarily, the wave choke system is provided with an annular portion that is configured to be arranged into abutment on the surface inner door cover opposite to the oven cavity, so as to be placed close to the perimeter front frame when the oven door is in the closed position.

According to some preferred non-limiting embodiments, the metal wave choke system is provided with an annular slot, which is realized in the annular portion of the wave choke system, has a shape complementary to the shape of the annular groove of the inner door cover, and is configured to be arranged about the annular groove when the metal wave choke system is placed on the inner door cover, so that the annular portion of the wave choke system may enclose completely the annular groove and the annular gasket.

In this way, one improves the sealing of the oven against microwave leakages, as the wave choke system is arranged as close as possible to the perimeter front frame when the oven door is closed.

In addition, since there are no gaps between the oven cavity and the perimeter front frame, the metal material continuity between the oven cavity and the perimeter front frame is ensured and there are no microwave leakages from the oven body. Furthermore, the wave choke system encloses completely the annular gasket, the annular gasket need not to comprise any metal part to stop microwaves propagation and it may be formed as a single piece completely in a polymeric material.

A non-limiting embodiment of the present invention will now be described, by way of example, with reference to the accompanying drawings, in which:
- Figure 1 is a front perspective and partially exploded view of a microwave oven according to the present invention, with parts removed for clarity;
- Figure 2 is an exploded view of the microwave oven of Figure 1, with parts removed for clarity;
- Figure 3 is a perspective view of the oven door of the microwave oven of Figure 1, with parts removed for clarity;
- Figure 4 is an enlarged cross-sectional view of a portion of the microwave oven of Figure 1 according to the section plane A-A of Figure 3, with parts removed for clarity; and
- Figure 5 is an enlarged cross-sectional and partially exploded view of a portion of the oven door of the microwave oven of Figure 1 according to the section plane B-B of Figure 3, with parts removed for clarity.

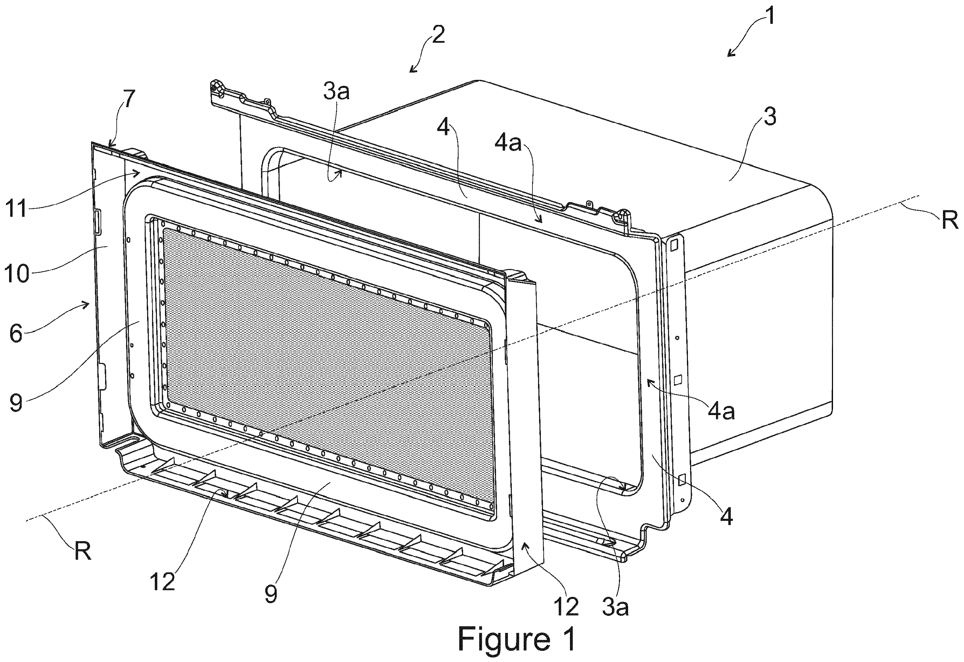

With reference to Figure 1, number 1 denotes as a whole an oven, in particular an oven with a microwave heating function, for the thermal treatment, in particular for the heating, of items such as food products.

Oven 1 may be a microwave oven or a multifunctional oven with a microwave heating function.

The item to be thermally treated can be provided in solid and/or liquid form. The item to be thermally treated can be a food product such as meat, vegetables, beverages, soups, water and the like.

In the following, reference will be made explicitly to a microwave oven. However, it is clear that the present invention it is not limited to the microwave oven, but it may be related also to any kind of oven, preferentially of any kind of multifunctional oven with a microwave heating function, for instance a combined microwave and steam oven.

Oven 1 comprises a box-shaped oven body 2 extending along a reference axis R. Oven body 2 includes an oven cavity 3, which is adapted to contain the item to be heated and is provided with a front opening 3a for the access to the inside volume of oven cavity 3. Additionally, oven body 2 includes a perimeter front frame 4, which is carried by the oven cavity 3 and encloses at least partially the front opening 3a of the oven cavity 3.

In particular, reference axis R may be normal to front opening 3a. In addition, a depth of oven cavity 3 may be defined with respect to reference axis A.

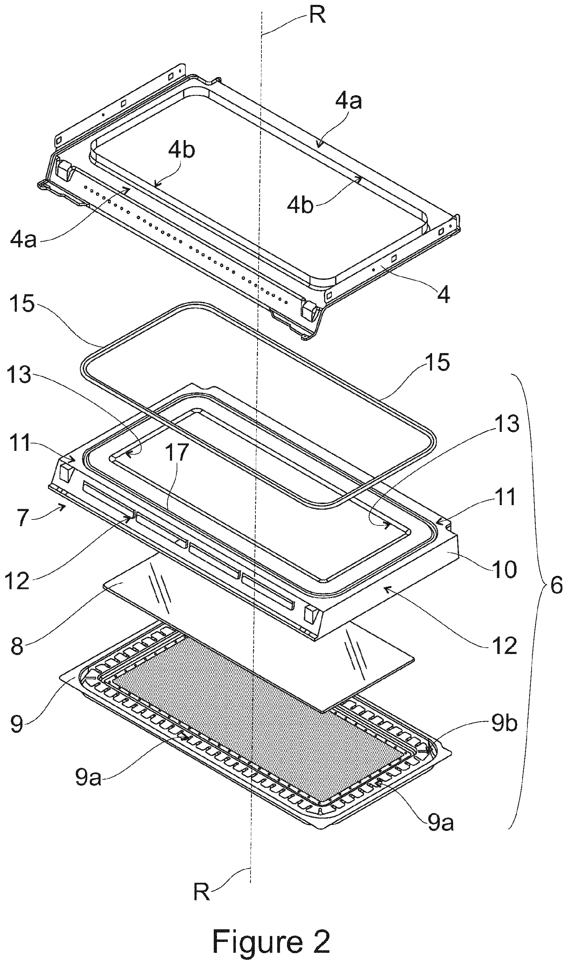

In addition, oven 1 comprises an oven door 6 (only partially shown in Figure 1 and 2), which is carried in an angular moveable manner by oven body 2 and is rotatable from and towards a closed position. In the closed position, oven door 6 is located into abutment against the perimeter front frame 4, so as to close the front opening 3a of the oven cavity 3.

According to the exemplary embodiment shown in Figure 1, in particular, oven cavity 3 may have a substantially parallelepiped shape, and the front opening 3a of oven cavity 3 may have a substantially rectangular and/or quadratic shape.

Additionally, perimeter front frame 4 may have a shape complementary to the shape of the front opening 3a of oven cavity 3. In particular, perimeter front frame 4 may have an annular shape and it may surround seamlessly the front opening 3a of oven cavity 3.

Preferentially, perimeter front frame 4 may be coupled directly and seamlessly to the annular perimeter edge of the oven cavity 3 that bounds the front opening 3a, so that no gap or crevice is left between the oven cavity 3 and the perimeter front frame 4.

In other words, perimeter front frame 4 may be fixed to oven cavity 3 seamlessly along the entire annular perimeter edge that bounds the front opening 3a.

According to the preferred non-limiting embodiment shown in Figures 1, 2 and 4, front frame 4 may comprise a front annular wall 4a, which lies on a plane substantially orthogonal to the reference axis R and, in use, extends cantilevered outwardly from the annular perimeter edge of the oven cavity 3 that bounds the front opening 3a.

In addition, perimeter front frame 4 may comprise an inner protruding flange 4b, which extends cantilevered from the inner annular edge of the front annular wall 4a, in a direction transversal to this latter. In particular, the protruding flange 4b may extend in a direction orthogonal to the front annular wall 4a, i.e. parallel to reference axis R. Additionally, protruding flange 4b may surround seamlessly the front annular wall 4a.

According to some preferred non-limiting embodiments, oven cavity 3 and perimeter front frame 4 are made of metal material, such as aluminum or the like.

In particular, perimeter front frame 4 may have a monolithic structure and it may be realized starting from a single flat sheet of metal of adequate thickness.

Additionally, perimeter front frame 4 may be firmly fixed to oven cavity 3 by welding.

More in detail, protruding flange 4b of the perimeter front frame 4 may be fixed in direct contact and seamlessly with the annular perimeter edge of the oven cavity 3 that bounds the front opening 3a, so that no gap or crevice is left between the oven cavity 3 and the perimeter front frame 4 and the oven body 2 has a continuous and homogeneous front surface.

According to the preferred non-limiting embodiment shown in Figures 1, 2 and 3, oven door 6 may have a box-shaped structure and may comprise at least:
- an inner door cover 7 facing the oven body 2;
- an outer door cover (not shown in the Figures), which may have a shape complementary to the shape of the inner door cover 7, and may be coupled to the inner door cover 7, on the opposite side with respect to the oven body 2;
- an inner glass panel 8, which is carried by the inner door cover 7 and faces the oven body 2; and
- a metal wave choke system 9, which is carried by the inner door cover 7 and is adapted to be arranged close to perimeter front frame 4 when oven door 6 is in the closed position, so as to prevent microwaves leakage during microwave oven 1 operation.

More in detail, according to some preferred non-limiting embodiments, the outer door cover may comprise a front glass panel, which may carry a door handle and may be carried by the inner door cover 7 by means of a pair of columnar fixing elements, in a manner known per se.

Additionally, inner door cover 7 is adapted to be arranged skimming the perimeter front frame 4 when oven door 6 is in the closed position, so as to define a narrow annular gap with this latter.

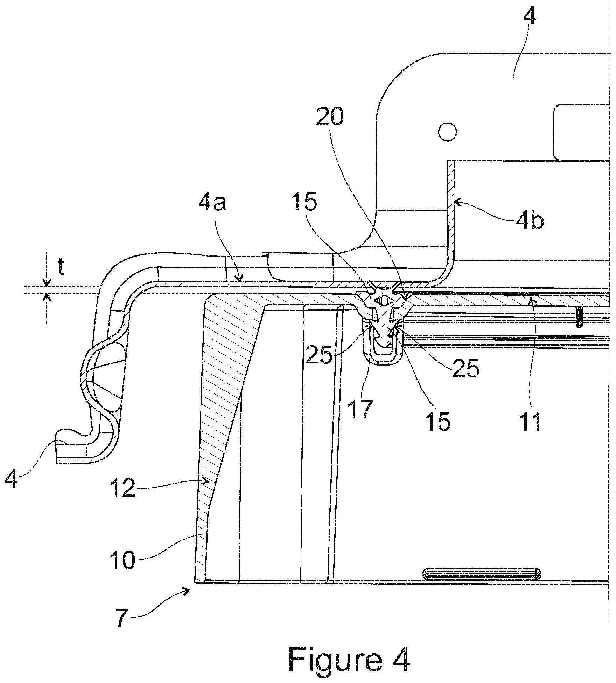

In particular, with reference to Figure 4, the annular gap defined between the inner door cover 7 and the perimeter front frame 4, when oven door 6 is in the closed position, may have a thickness t lower than 2 millimeters and more advantageously lower than or equal to 1 millimeter.

Additionally, according to some preferred non-limiting embodiments, the inner door cover 7 and/or the outer door cover may be shaped so as to define an inner cavity of the oven door 6. Inner glass panel 8 and metal wave choke system 9 may be arranged within this inner cavity.

Preferentially, inner door cover 7 may have a monolithic structure and may be made of a polymeric material. In other words, inner door cover 7 may be formed as a single piece.

With reference to the example shown in Figures 1-5, in particular, inner door cover 7 may comprise a monolithic cup-shaped body 10.

More in detail, inner door cover 7 may comprise a rear wall 11 that lies on a plane orthogonal to reference axis R and skims the perimeter front frame 4 when oven door 6 is in the closed position. Additionally, inner door cover 7 may comprise a lateral wall 12 that extends cantilevered from the outer perimeter edge of the rear wall 11 in a transversal direction to this latter. Preferentially, lateral wall 12 may extend substantially orthogonal to the rear wall 11. Additionally, lateral wall 12 may have an annular shape and may surround substantially seamlessly the rear wall 11.

According to the preferred non-limiting embodiment shown in Figures 2-5, the rear wall 11 of the inner door cover 7 may be provided with a central opening 13 with a shape substantially complementary to the shape of the inner glass panel 8. Inner glass panel 8 may be arranged within the central opening 13 of the inner door cover 7, in order to allow a user to be able to visually inspect the inner of the oven cavity 3 through the outer glass panel and the inner glass panel 8 when the oven door 6 is in the closed position.

In particular, the rear wall 11 of the inner door cover 7 may have an annular shape and may seamlessly surround the inner glass panel 8.

According to the preferred non-limiting embodiment shown in Figures 2-5, oven 1 is further provided with an annular gasket 15 that is carried by oven door 6 and is adapted to be arranged into abutment against perimeter front frame 4 when oven door 6 is in the closed position, in order to seal the oven cavity 3 and prevent thermal or steam leakages. In particular, inner door cover 7 carries the annular gasket 15.

Additionally, annular gasket 15 may be formed as a single piece and may be made out of a polymeric material, for instance by means of an extrusion process. More in detail, annular gasket 15 may be made out of a single elastomeric material, for instance silicone or the like. Even more in detail, the annular gasket 15 may lack portions made out of non-polymeric material, such as metal.

According to the preferred non-limiting embodiment shown, inner door cover 7 is provided with an annular groove 17, which extends on the surface of the inner door cover 7 facing the perimeter front frame 4 and is adapted to accommodate the annular gasket 15. In particular, the annular groove 17 may extend on the rear wall 11 of the inner door cover.

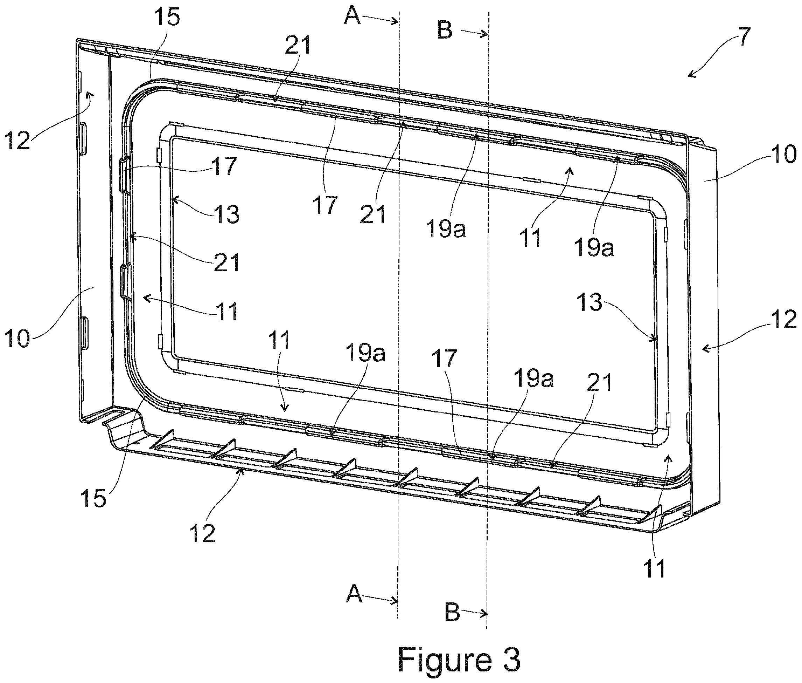

With reference to the example shown in Figures 2 and 3, annular groove 17 may be arranged facing the perimeter front frame 4 when the oven door 6 is in the closed position, in order to surround seamlessly the front opening of the oven cavity 3. In other words, annular groove 17 may surround seamlessly the central opening 13, i.e. the inner glass panel 8.

Additionally, the annular groove 17 may protrude inside the inner cavity of the oven door 6, towards the outer door cover, preferentially in a direction substantially orthogonal to the laying plane of the rear wall 11.

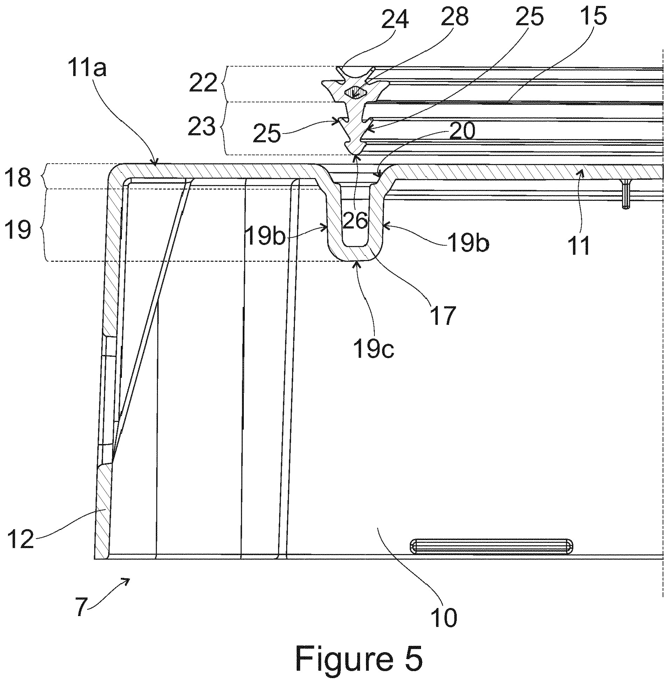

According to the preferred non-limiting embodiment shown in Figure 5, the annular groove 17 may comprise a first annular portion 18 and a second annular portion 19, preferentially opposite and contiguous to the first annular portion 18.

Preferentially, the first annular portion 18 may define a mouthpiece of the annular groove 17, and the second annular portion 19 may define a bottom of the groove 17.

In particular, first annular portion 18 may connect to the rear wall 11 of inner door cover 7, meaning that it may be contiguous with the surface 11a of the rear wall 11 facing perimeter front frame 4.

First annular portion 18 may be configured to allow for placement of annular gasket 15 within annular groove 17. In other words, first annular portion 18 defines and/or delimits an opening of annular groove 17, in particular such that an operator or a machine may place annular gasket 15 within annular groove 17.

Additionally, first annular portion 18 may have a tapered profile. In particular, first annular portion 18 may be shaped so as to define an annular seat 20 accommodating a portion, preferentially a complementary-shaped portion, of the annular gasket 15. Such portion of the annular gasket 15 may be adjusted according to a shape of the first annular portion 18, in particular for optimizing the placement of annular gasket 15 within annular groove 17.

On the other hand, second annular portion 19 may connect to the first annular portion 18 and may extend on the opposite side with respect to the rear wall 11, preferentially inside the inner cavity of the oven door 6.

With reference to the example shown in Figure 3, the annular groove 17 may be further provided with a plurality of cutouts 21 that are formed on the second annular portion 19. In particular, the cutouts 21 may be angularly spaced apart from one another along annular groove 17.

More in detail, the second annular portion 19 of annular groove 17 may comprise a plurality of sections 19a, which are angularly spaced apart from one another. Each section 19a is interposed between two respective cutouts 21, or vice-versa, each cutout 21 is interposed between two respective section 19a.

In other words, the cutouts 21 are the results of forming the second annular portion 19 not as a single piece, but by forming the second annular portion 19 as a plurality of spaced apart sections 19a.

That is, the second annular portion 19 is discrete, meaning it is not defined as a single piece but as a plurality of distinct segments 19a, spaced apart from one another and without being connected to one another.

In even other words, the cutouts 21 are defined by providing recesses within annular groove 17.

According to the preferred non-limiting embodiment shown in Figures 4 and 5, second annular portion 19 of annular groove 17 preferentially may have substantially U-shaped profile and it may comprise two facing sidewalls 19b connected by a base wall 19c.

Substantially U-shaped indicates that the profile mainly reflects a U-shape; i.e. the profile may deviate in minor parts from the U-shape. E.g. also a shape which may rather reflect a V-shape can be considered as a U-shape.

Preferentially, base wall 19c may be substantially parallel to rear wall 11 and sidewalls 19b may substantially orthogonal to rear wall 11.

Additionally, according to the preferred non-limiting embodiment shown in Figures 4 and 5, annular gasket 15 may have a substantially T-shaped profile.

Substantially T-shaped indicates that the profile mainly resembles the shape of a T; i.e. the profile may deviate in minor parts from the T-shape.

In particular, annular gasket 15 may comprise a first annular portion 22 and a second annular portion 23. First annular portion 22 being enlarged with respect to the second annular portion 23. Preferentially, first annular portion 22 and second annular portion 23 connect to each another.

Preferentially, first annular portion 22 of the annular gasket 15 may be arranged at least partially within the first annular portion 18 of the annular groove 17. On the other hand, second annular portion 23 may be arranged within the second annular portion 19 of the annular groove 17.

More in detail, at least a part of the first annular portion 22 of the annular gasket 15 may have a shape complementary to the shape of the first annular portion 18 of annular groove 17.

In even more detail, at least a part of the first annular portion 22 of the annular gasket 15 may have a shape complementary to the shape of the annular seat 20 of the annular groove 17, and may be arranged within the annular seat 20.

Additionally, according to the preferred non-limiting embodiment shown in Figures 4 and 5, first annular portion 22 may be sized so as to at least partially protrude cantilevered from inner door cover 7 when annular gasket 15 is arranged within annular groove 17, in order to abut against perimeter front frame 4 when oven door 6 is in the closed position.

More in detail, with reference to Figure 4, first annular portion 22 may protrude cantilevered from inner door cover 7 for an extension at least equal to the thickness t of the annular gap defined between the perimeter front frame 6 and the inner door cover 7 when the oven door 6 is in the closed position.

In even more detail, as shown in the example of Figures 4 and 5, first annular portion 22 may be provided with protruding annular lip 24 that is configured to be arranged into abutment against perimeter front frame 4 when oven door 6 is in the closed position.

Preferentially, protruding annular lip 24 may have a C-shaped profile and may extend seamlessly along first annular portion 22 for the entire length of annular gasket 15.

In particular, the C-shaped profile of the protruding annular lip 24 is configured to create an under pressure area when it is pressed against perimeter front frame 4, to seal oven cavity 3 against thermal and/or steam leakages.

According to the preferred non-limiting embodiment shown in Figures 4 and 5, annular gasket 15 may be provided with anchoring means, which are configured to engage within annular groove 17, in order to steadily retain annular gasket 15 inside the annular groove 17. In particular, the anchoring means may be configured to engage with sidewalls 19b of second annular portion 19 of the annular groove 17.

More in detail and with reference to Figures 4 and 5, annular gasket 15 may be provided with a pair of laterally protruding lips 25 that protrude from opposite sides of annular gasket 15 and extend cantilevered from second annular portion 23, preferentially in a direction transversal to annular gasket 15 and/or towards first annular portion 22. The two laterally protruding lips 25 engage with the lateral walls 19b of second annular portion 19 of the annular groove 17.

In particular, as shown in Figure 4, the sections of the laterally protruding lips 25 that are located within the cutouts 21 may locally extend in a direction transversal to the annular gasket 15 and/or towards first annular portion 22, in order to engage with the edges of sidewalls 19b of annular groove 17 that bounds cutouts 21, so as to hook annular gasket 15 inside this latter.

Preferentially, the two laterally protruding lips 25 extend seamlessly for the entire length of annular gasket 15.

With reference to the example shown in Figure 5, the second annular portion 23 of the annular gasket 15 may be additionally provided with an end 26, opposite to the first annular portion 22 and preferably enlarged with respect to the other portions of the second annular portion 23, which is configured to be gripped by an operator or a robot, in order to allow pulling down and adjusting the position of annular gasket 15 within annular groove 17.

Additionally, the annular groove may 15 may be provided with an annular hollow core 28, which extends inside annular gasket 15 and is adapted to allow the annular gasket 15 to deform elastically when pressed against perimeter front frame 4.

Preferentially, the annular hollow core 28 may extend seamlessly for the entire length of annular gasket 15.

According to the preferred non-limiting embodiment shown in Figure 2, the inner glass panel 8 may be interposed between the inner door cover 7 and the metal wave choke system 20. In particular, the metal wave choke system 20 may be carried by the inner door cover so as to enclose the inner glass panel 8.

More in detail, the metal wave choke system 9 may be provided with an annular portion 9a that is adapted to be arranged into abutment on the outer surface of the rear wall 11 of the inner door cover 7, opposite to the oven body 2, so as to be located close to the front frame 4 when the oven door 6 is in the closed position.

The metal wave choke system 9 may be further provided with an annular slot 9b, which may be realized in the annular portion 9a of the metal wave choke system 9 and may have a shape complementary to the shape of the annular groove 17. The annular slot 9b may be arranged about the annular groove 17 when the metal wave choke system 9 is placed on the inner door cover 7, so that the annular portion 9a may enclose completely the annular groove 17 and the annular gasket 15 and may be arranged into abutment against the outer surface of the rear wall 11 of the inner door cover

The operation of the oven door 6 of the microwave oven 1 is easily deduced from the above, and needs no further explanations.

Clearly, changes may be made to the microwave oven 1 without, however, departing from the scope of the present invention.

For example, according to an alternative embodiment of the present invention, the oven cavity 3 and the perimeter front frame 4 may be made as a single piece. Indeed, the oven cavity 3 and the perimeter front frame 4 may be made starting from a single sheet of metal of adequate thickness.

In addition, in a further alternative embodiment of the present invention, the annular gasket 15 may not be provided with the hollow annular core 17d.

### List of Reference Signs

- 1: Oven
- 2: Oven body
- 3: Oven cavity
- 3a: Front opening
- 4: Perimeter front frame
- 4a: Front annular wall
- 4b: Protruding flange
- 6: Oven door
- 7: Inner door cover
- 8: Inner glass panel
- 9: Wave choke system
- 9a: Annular portion
- 9b: Annular slot
- 10: Cup-shaped body
- 11: Rear wall
- 11a: Surface
- 12: Lateral wall
- 13: Central opening
- 15: Annular gasket
- 17: Annular groove
- 18: First annular portion
- 19: Second annular portion
- 19a: Sections
- 19b: Sidewalls
- 19c: Base wall
- 20: Annular seat
- 21: Cutouts
- 22: First annular portion
- 23: Second annular portion
- 24: Protruding annular lip
- 25: Laterally protruding lips
- 26: End
- 28: Annular hollow core
- R: Reference axis
- t: Thickness

## Claims

1. - An oven (1), preferentially having a microwave heating function, for heating an item comprising at least:
- an oven cavity (3), which extends along a reference axis (R), is adapted to contain the item to be thermally treated and is provided with a front opening (3a) allowing to access the oven cavity (3);
- a perimeter front frame (4), which is carried by the oven cavity (3) and surrounds the front opening (3a) of the oven cavity (3);
- an oven door (6), which is movable from and towards a closed position, in which the oven door (6) closes the front opening (3a) of the oven cavity (3); and
- an annular gasket (15), which is carried by the oven door (6) and is configured to abut against the perimeter front frame (4) when the oven door (6) is in the closed position, in order to seal the oven cavity (3);
the oven door (6) comprising an inner door cover (7) which is configured to be arranged skimming the perimeter front frame (4) when the oven door (6) is in the closed position, and is provided with an annular groove (17) which extends on the surface of the inner door cover (7) facing the front frame (4) and accommodating the annular gasket (15).

2. - The oven according to claim 1, wherein the inner door cover (7) is formed as a single piece and comprises a rear wall (11) that lies on a plane orthogonal to the reference axis (R) and skims the perimeter front frame (4) when the oven door (6) is in the closed position; the annular groove (17) extends on the rear wall (11) of the inner door cover (7) so as to surround seamlessly the front opening (3a) of the oven cavity (3) when the oven door (6) is in the closed position.

3. - The oven according to claim 2, wherein the annular gasket (15) is provided with anchoring means that are adapted to engage within the annular groove (17), in order to steadily retain the annular gasket (15) inside the annular groove (17).

4. - The oven according to claim 3, wherein the annular groove (17) comprises: a first annular groove portion (18), which connects to the rear wall (11) and delimits an opening of the annular groove (17) allowing the annular gasket (15) to be at least partially arranged within the annular groove (17); and a second annular groove portion (19), which connects to the first annular groove portion (18), on the opposite side with respect to the rear wall (11) .

5. - The oven according to claim 4, wherein the first annular groove portion (18) is shaped so as to define a seat (20) accommodating a portion of the annular gasket (15) .

6. - The oven according to claim 4 or 5, wherein the annular groove (17) is provided with a plurality of cutouts (21) that are formed in the second annular groove portion (19) and are angularly spaced apart from one another along the annular groove (17).

7. - The oven according to claim 5 or 6, wherein the annular gasket (15) comprises: a first annular gasket portion (22), which is arranged at least partially within the first annular groove portion (18) and protrudes cantilevered from the inner door cover (7), in order to abut against the perimeter front frame (4) when the oven door (6) is in the closed position; and a second annular gasket portion (23), which connects to the first annular gasket portion (22) and is arranged within the second annular groove portion (23).

8. - The oven door according to claim 7, wherein the second annular groove portion (19) has a substantially U-shaped profile and comprises two facing sidewalls (19b) connected by a base wall (19a).

9. - The oven according to claim 8, wherein the anchoring means comprise a pair of laterally protruding lips (25), which protrude from opposite sides of the second annular gasket portion (23), in a direction transversal to annular gasket (15) and/or towards the first annular portion (22), and are configured to engage with the sidewalls (19b) of the second annular groove portion (19).

10. - The oven according to claim 7, 8 or 9, wherein the first annular gasket portion (22) is provided with a protruding annular lip (24) configured to be pressed against the perimeter front frame (4) when the oven door (6) is in the closed position.

11. The oven according to any of the preceding claims, wherein the annular gasket (15) is formed as a single piece and is made out of a single polymeric material.

12. - The oven according to any of the preceding claims, wherein the perimeter front frame (4) is connected directly and seamlessly to the annular perimeter edge of the oven cavity (3) that bounds the front opening (3a), so that no gap or crevice is left between the perimeter edge of the oven cavity (3) that bounds the front opening (3a) and the perimeter front frame (4).

13. - The oven according to any of the preceding claims, wherein the oven door (6) further comprises:
- an outer door cover that has a shape complementary to the shape of the inner door cover (7) and is adapted to be coupled to the inner door cover (7), on the opposite side with respect to the oven cavity (3);
- an inner glass panel (8) carried between the inner door cover (7) and the outer door cover; and
- a wave choke system (9), carried between the inner door cover (7) and the outer door cover.

14. - The oven according to claim 13, wherein the wave choke system (9) is provided with an annular portion (9a) that is adapted to be arranged into abutment on the surface inner door cover opposite to the oven cavity (3), so as to be placed close to the perimeter front frame (4) when the oven door (6) is in the closed position.

15. - The oven according to claim 14, wherein the metal wave choke system (9) is provided with an annular slot (9b), which is realized in the annular portion (9a) of the wave choke system (9), has a shape complementary to the shape of the annular groove (17) of the inner door cover (7), and is adapted to be arranged about the annular groove (17) when the metal wave choke system (9) is placed on the inner door cover (7), so that the annular portion (9a) of the wave choke system (9) may enclose completely the annular groove (17) and the annular gasket (15).
